# EUROPEAN PATENT SPECIFICATION

(11) **EP 2 887 576 B1**
(45) Date of publication and mention of the grant of the patent: **10.10.2018**
(21) Application number: 13829440.0
(22) Date of filing: 10.07.2013
(51) Int. Cl.: H04L 9/08, H04L 9/32

(54) **SOFTWARE KEY UPDATING METHOD AND DEVICE**
VERFAHREN UND VORRICHTUNG ZUR AKTUALISIERUNG VON SOFTWARESCHLÜSSELN
PROCÉDÉ ET DISPOSITIF POUR LA MISE À JOUR D'UNE CLÉ DE LOGICIEL

(30) Priority: 17.08.2012 CN 201210293518
(43) Date of publication of application: 24.06.2015
(73) Proprietor: Huawei Technologies Co., Ltd., Longgang District Shenzhen, Guangdong 518129 (CN)
(72) Inventor: CUI, Yang, Shenzhen Guangdong 518129 (CN); ZHAO, Xingjun, Shenzhen Guangdong 518129 (CN); WANG, Huijun, Shenzhen Guangdong 518129 (CN)
(74) Representative: Isarpatent
(86) International application number: PCT/CN2013/079126
(87) International publication number: WO 2014/026518

(56) References cited:
- CN-A- 1 808 456
- CN-A- 102 081 716
- US-A- 5 761 306
- US-A1- 2005 120 203
- US-A1- 2005 144 440
- US-A1- 2012 151 199

## Description

### TECHNICAL FIELD

The invention relates to the field of wireless communication, and particularly to a method and a device for updating a software key.

### BACKGROUND

With the development of the Mobile Internet, terminals and network devices have played an essential and important role in social life, and user information security and privacy protection have gained increasing attention. Furthermore, a flat wireless network architecture, an Internet Protocol (Internet Protocol, IP) mobile network, an intelligent terminal and a small-sized network device such as a base station result in more and more security threats to terminals or network devices.

To cope with the security threats to software and hardware of the terminals or the network devices, many terminals and network devices are required to be designed with certain trusted environment for verifying identity legality of the terminal or the network device itself and verifying whether an anomaly of being attacked occurs. The trusted environment (Trusted Environment, TrE) is a logical entity for providing trusted environment, securing performance of a secret function (secret function) and storing secret information.

Security requirement of a small network device or a small terminal with a physical environment that is vulnerable to an attack is more urgent. To ensure that a Femtocell (Home (evolved) Node B, H(e)NB) supports trusted environment in hardware, the 3rd Generation Partnership Project (3rd Generation Partnership Project, 3GPP) international standard TS33.320 makes the following requirements on the trusted environment: when H(e)NB is powered on or restarted, the trusted environment must be a secure start process constituted by a non-removable hardware-based trusted root key. The trusted root key must be physically bound to the H(e)NB. The secure start process should include performing an integrity check on the trusted root key of TrE. Only the trusted root key that is successfully verified can be loaded or started. After TrE is started successfully, other assembly required for safe running in the H(e)NB (such as, an operating system and a program) are verified.

A similar trusted environment may also be established on an intelligent terminal, for implementing a secure start that prevents a malicious code from being inserted, security self-checking and installation of a software, secure storage of secret information and so on. In the following, the involved network device and terminal having trusted environment are collectively referred to as a trusted client device (Client) or a trusted device.

The trusted platform module (Trusted Platform Module, TPM) is a core module of TrE. Generally, several cryptographic function modules (cryptographic function modules) are packaged in a chip in a form of system on chip (System on Chip, SoC), and the inside of TPM can not be accessed from the outside without authorization. An endorsement key (Endorsement Key, EK) pair is imbedded into the chip in advance when leaving the factory. The EK pair, a master key (Master Key, MK) pair deduced from the EK pair, and intermediate data of calculation are stored in the TPM module. The reason that TrE is trusted is that: each TPM has a different key pair which brings a high security, and the TPM platform or a device having a similar function as the TPM platform has a physical security. The trusted environment established on this basis can prevent an illegal access to the inside of the trusted client device, protect the trusted root key of TrE, i.e., TPM, and thus establish a trust chain. The TPM chip is widely used to personal computers (Personal Computer, PC), and can be used to manage or store secret information on the hard disk, provide encryption for a network communication, encrypt and store hard disk data, and so on.

Conventionally, it is not possible to remotely control the TPM to update a public key of a signature key.

Document US 5761306 A discloses a method of secure public key replacement in a public key cryptography system, in which an active public key and a mask of a replacement public key are transmitted to a second node, and when key replacement needs to be performed, a key replacement message including the replacement public key is transmitted to the second node, and the second node verifies the replacement public key and then performs the replacement.

Document US 2005/120203 A1 discloses a method for rekeying in an authentication system including an authenticated data processing system and an authenticating data processing system. In the method, failure of an authentication of the authenticated data processing system is detected with a current public key associated with the authenticated data processing system, and the current public key associated with the authenticated data processing system is updated with an updated public key if the failure is detected.
Document US2012/151199 A1 discloses a method in which a change to a boot configuration is detected and non-release of the secret value is identified, then an update encryption key is retrieved and an update copy of a disk encryption key is decrypted using the retrieved update encryption key.

### SUMMARY

In view of the above, an embodiment of the invention provides a method and an apparatus for updating a software key, to solve the problem of updating a software key.

In a first aspect, a method for updating a software is provided, which includes:
receiving, by a trusted client device, key information and verification information corresponding to a software and transmitted by a server, where the key information includes a first software signature public key to be updated and a new second software signature public key, and the verification information includes software verification information;
verifying whether a legal first software signature public key that corresponds to the software and is stored in the trusted client device is consistent with the received first software signature public key;
verifying whether the software verification information is legal if the legal first software signature public key corresponding to the software and stored in the trusted client device is consistent with the received first software signature public key; and
updating the legal first software signature public key corresponding to the software and stored in the trusted client device to be the second software signature public key if the software verification information is legal.

In a second aspect, a trusted security module is provided, which includes a storage unit, an input unit and a verification unit, where
the storage unit is configured to store a legal first software signature public key corresponding to a software;
the input unit is configured to receive key information and verification information corresponding to the software, where the key information includes a first software signature public key to be updated and a new second software signature public key, and the verification information includes software verification information; and
the verification unit is configured to verify whether a legal first software signature public key that corresponds to the software and is stored in the storage unit is consistent with the first software signature public key received by the input unit; verify whether the software verification information received by the input unit is legal if the legal first software signature public key corresponding to the software and stored in the storage unit is consistent with the first software signature public key received by the input unit; and update the legal first software signature public key corresponding to the software and stored in the storage unit to be the second software signature public key received by the input unit if the software verification information is legal.

In a third aspect, a trusted client device is provided, which includes a reception module and the trusted security module as described above, where
the reception module is configured to receive key information and verification information corresponding to a software and transmitted by a server and transmit the key information and the verification information to the trusted security module, where the key information includes a software signature public key to be updated and a new software signature public key, and the verification information includes software verification information.

With the above solutions, a software signature key on the trusted client device can be updated remotely, and thus the problem that an invalid key can not be updated is avoided.

### BRIEF DESCRIPTION OF DRAWINGS

To explain the technical solutions of the embodiments of the invention more clearly, drawings to be used in the description of the conventional technology and embodiments are illustrated briefly below. Apparently, the drawings in the description below are just several embodiments, and other drawings may also be obtained by those skilled in the art based on these drawings.
FIG. 1 is a flow chart of a method for updating a software key according to an embodiment of the invention;
FIG. 2 is a flow chart of a method for updating a software key according to another embodiment of the invention;
FIG. 3 is a flow chart of a method for updating a software key according to another embodiment of the invention;
FIG. 4 is a flow chart of a method for updating a software key according to another embodiment of the invention;
FIG. 5 is a flow chart of a method for updating a software key according to another embodiment of the invention;
FIG. 6 is a structural schematic diagram of a trusted security module according to an embodiment of the invention; and
FIG. 7 is a structural schematic diagram of a trusted client device according to an embodiment of the invention.

### DETAILED DESCRIPTION OF EMBODIMENTS

In the following, the technical solutions of the embodiments of the invention will be described clearly and completely in combination with the drawings of the embodiments of the invention. Apparently, the embodiments described below are only some but not all of embodiments of the invention. All other embodiments obtained by those skilled in the art based on the embodiments of the invention should fall within the scope of protection of the invention.

It should be noted that the embodiments of the invention and features in the embodiments of the invention can be combined arbitrarily with each other under a condition of no conflict.

There has been a mature and reliable solution to manage and store secret information in the existing TrE technique currently. Because there is a trust chain of the trusted environment, unauthorized access and modification to the software in the trusted client device is not allowed, and legality check of the installed software is mainly dependent on a digital signature. However, the above existing technique has the following problems.
1. In the legality check of the signature of the software, it can not be ensured that the public key corresponding to the signature (abbreviated as software signature public key below) is newly public, and if necessary, for example, when the key managed on the software release side is lost, exposed or reaches the end of its lifetime, the public key can not be updated by controlling TPM remotely.
2. If the software signature key used by the software has been exposed or expired and the client continues to use the old software signature key, security problem may occur, for example, illegal codes are viciously installed, programs are tampered or the trusted environment is damaged by an attacker.

To solve the above technical problems, embodiments of the invention provide a method for updating a key, a trusted security module and a trusted client device. In the embodiments of the invention, a key update process may be initialized from a remote end, and a software signature key in the trusted client device is automatically replaced without an affecting a TrE security flow. Therefore, the problem of updating an installed software signature key in the trusted client device having TrE trusted environment is addressed.

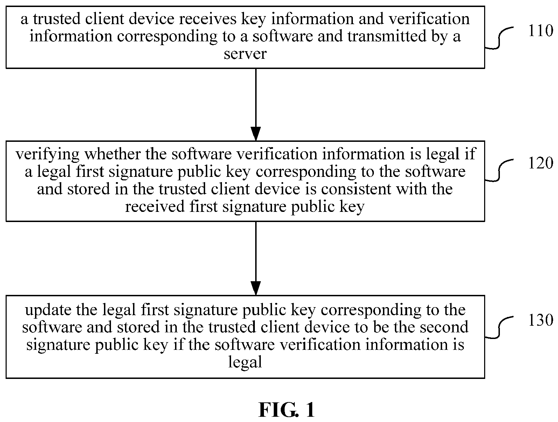

An embodiment of the invention provides a method for updating a software key. As shown in FIG. 1, the method includes the following steps.

In step 110, a trusted client device receives key information and verification information corresponding to a software and transmitted by a server, where the key information includes a first software signature public key to be updated and a new second software signature public key, and the verification information includes software verification information.

Preferably, the trusted client device may receive, via a secure connection, the key information and the verification information transmitted by the server.

In step 120, it is verified whether the software verification information is legal if a signature public key stored in the trusted client device is consistent with the received first software signature public key.

In this step, whether the first software signature public key corresponding to the software and stored in the trusted client device is legal firstly may be firstly verified, and the verification includes: verifying, by the trusted client device, whether the pre-stored first key verification information matches with the stored first software signature public key, and determining that the first software signature public key stored in the trusted client device is legal if the pre-stored first key verification information matches with the stored first software signature public key.

It may also not to verify whether the first software signature public key corresponding to the software and stored in the trusted client device is legal. For example, it may be considered that the first software signature public key corresponding to the software and stored in the trusted client device is legal by default.

Preferably, there may be multiple softwares required to be protected on the trusted client device. In this embodiment, in order to improve storage efficiency of the trusted client device, the first key verification information may be joint verification information of the software signature public keys of the multiple softwares.

In this step, the software verification information may include a first signature value of a code of the software. The first signature value is obtained by the server by performing calculation on the code of the software by using a signature algorithm and a private key corresponding to the second software signature public key, and the signature algorithm is agreed between the server and the trusted client device in advance.

Verifying legality of the software verification information may include:
acquiring the code of the software, performing calculation on the first signature value by using the second software signature public key and the signature algorithm, comparing a calculation result with the acquired code of the software, and determining that the software verification information is legal if the calculation result is the same as the acquired code of the software.

Acquiring the code of the software may include:
acquiring the code of the software pre-stored in the trusted client device.

Alternatively,
the verification information further includes the code of the software; and acquiring the code of the software includes: acquiring the code of the software from the received verification information.

In step 130, the legal first software signature public key corresponding to the software and stored in the trusted client device is updated to be the second software signature public key if the software verification information is legal.

This step may further include: acquiring first key verification information about the second software signature public key, and updating the pre-stored first key verification information to be the first key verification information about the second software signature public key.

With the embodiment of the invention, a software signature public key on the trusted client device can be updated remotely, thereby avoiding the problem that an invalid key can not be updated and the problem that the trusted client device can not be normally started due to the change of the software signature key.

Preferably, the method according to the embodiment of the invention may further include:
storing the received first signature value of the code of the software, for verification when the software is started, or
obtaining a first hash value by performing calculation on the code of the software by using a key pre-stored in the trusted client device and a first keyed hash algorithm, and storing the first hash value, for verification when the software is started.

The first hash value and the first signature value may be stored in a storage unit of the trusted client device. In addition, since the space occupied by a hash value is much less than the space occupied by a signature value, the first hash value may also be stored in the TPM of the trusted client device, to further improve the security.

Preferably, the verification information also includes second key verification information;
the second key verification information includes a second hash value of the first software signature public key and the second software signature public key; the second hash value is obtained by the server by performing calculation on the first software signature public key and the second software signature public key by using a preset pre-shared key and a second keyed hash algorithm; the second keyed hash algorithm is agreed between the trusted client device and the server in advance, the pre-shared key is preset in the trusted client device and the server; verifying whether the software verification information is legal if the legal first software signature public key corresponding to the software and stored in the trusted client device is consistent with the received first software signature public key includes: performing, by the trusted client device, calculation on the first software signature public key and the second software signature public key by using the pre-shared key and the second keyed hash algorithm to obtain a third hash value if the legal first software signature public key corresponding to the software and stored in the trusted client device is consistent with the received first software signature public key, determining whether the third hash value is equal to the second hash value by comparing, and verifying legality of the software verification information if the third hash value is equal to the second hash value;
and/or
the second key verification information includes a certificate Cert(PK_{A2}) of the second software signature public key PK_{A2} signed and issued by a third party certificate authority, CA; where the certificate Cert(PK_{A2}) is obtained by the server by performing encryption by using a key PK_{CA} signed and issued by the third party CA; and verifying whether the software verification information is legal if the legal first software signature public key corresponding to the software and stored in the trusted client device is consistent with the received first software signature public key includes: performing, by the trusted client device, calculation on the received second software signature public key by using the key PK_{CA} signed and issued by the third party CA and stored in the trusted client device to obtain a certificate Cert'(PK_{A2}) if the legal first software signature public key corresponding to the software and stored in the trusted client device is consistent with the received first software signature public key, comparing the certificate Cert'(PK_{A2}) obtained by calculation with the received certificate Cert(PK_{A2}), and verifying legality of the software verification information if the certificate Cert'(PK_{A2}) obtained by calculation is equal to the received certificate Cert(PK_{A2}).

It should be noted that the first keyed hash algorithm and the second keyed hash algorithm described above may be the same or different, and furthermore, any keyed hash algorithms in the conventional technology may be used, which is not limited in the embodiment of the invention.

In this embodiment, the check mechanism for the software signature public key update is also enhanced, to avoid a wrong update due to an unexpected event or a malicious code tamper caused by an intentional attack, efficiently prevent the code from being tampered by an illegal third party and eliminate potential threats caused by system security vulnerability.

The trusted client device described in the embodiment of the invention includes an intelligent terminal and a network device with trusted environment.

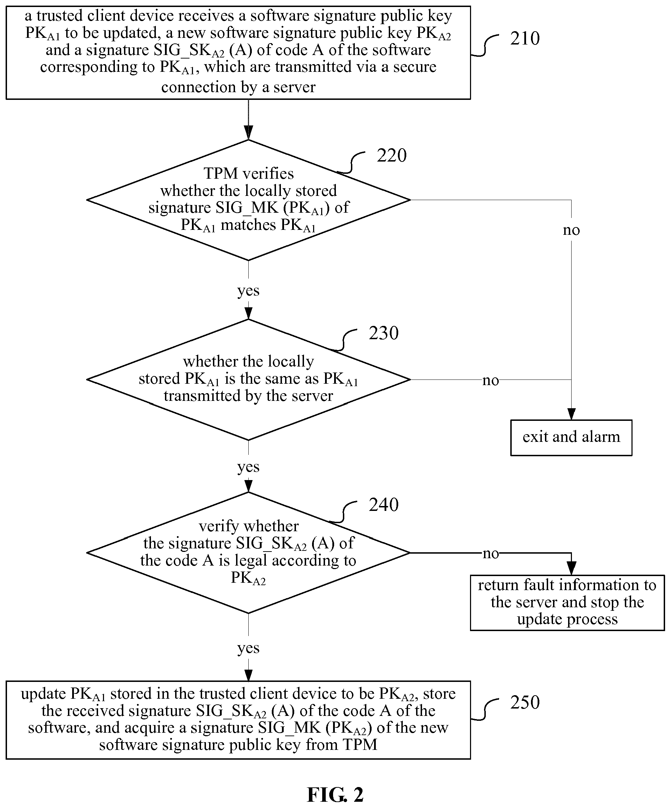

Another embodiment of the invention provides a method for updating a software key. As shown in FIG. 2, the method includes the following steps.

In step 210, the trusted client device receives a software signature public key PK_{A1} to be updated, a new software signature public key PK_{A2} and a signature SIG_SK_{A2} (A) of a code (Code) A of the software corresponding to PK_{A1} transmitted via a secure connection by a server (Server), where the signature of the code A is obtained by performing signature on the code A by using a private key SK_{A2} corresponding to the new software signature public key PK_{A2}.

In this step, the server establishes a secure connection to the trusted client (Client) device or uses an existing secure connection when the server needs to update the software signature key of the trusted client device. The method for establishing a secure connection may be any method for establishing a secure connection in the conventional technology, which is omitted in the embodiment of the invention.

Further, the server may also transmit the code A of the software, along with PK_{A1}, PK_{A2} and SIG_SK_{A2} (A), to the trusted client device. In such a case, this step also includes receiving the code A of the software.

It should be noted that software signature keys of multiple software may be updated simultaneously in the embodiment of the invention, provided that the keys corresponding to the multiple softwares and the signatures of the codes of the softwares are transmitted simultaneously.

In step 220, the trusted client device verifies whether the locally stored signature SIG_MK (PK_{A1}) of PK_{A1} matches with PK_{A1} by means of TPM, step 230 is performed if the locally stored signature SIG MK (PK_{A1}) of PK_{A1} matches with PK_{A1}, or otherwise, the method is ended and alarming is performed.

The signature SIG MK (PK_{A1}) of PK_{A1} is obtained by performing signature on the software signature public key PK_{A1} by using a key signature key MK stored in the trusted client device. MK is a key signature key MK deduced by using an endorsement key (Endorsement Key, EK) stored in TrE, and is used for signature protection to the software signature public key stored in the trusted client device. The key signature key deduced from EK may be MK stored in TPM, or may be other key deduced from EK, which are collectively represented by MK herein.

The method for verifying PK_{A1} and the signature SIG MK (PK_{A1}) may be implemented by using any digital signature algorithm in the conventional technology. The verification method is not limited in the embodiment of the invention.

Preferably, if there are multiple softwares to be protected on the trusted client device, the trusted client device may store a joint signature of software signature public keys corresponding to the multiple softwares. For example, if the trusted client device also protects code B of a software B, and the software B corresponds to the software signature public key PK_{B1}, the trusted client device stores a joint signature SIG_MK (PK_{A1}, PK_{B1}) of the software A and the software B. In this case, in the verification of this step, the joint signature of the software signature public key PK_{A1} and the software signature public key PK_{B1} is verified by using the key signature key MK stored in the trusted client device.

In step 230, the trusted client device determines whether the locally stored PK_{A1} is the same as PK_{A1} transmitted by the server by comparing, step 240 is performed if the locally stored PK_{A1} is the same as PK_{A1} transmitted by the server, or otherwise, the method is ended and alarming is performed.

In step 240, it is verified whether the signature SIG_SK_{A2} (A) of the code A is legal according to PK_{A2}, step 250 is performed if the signature SIG_SK_{A2} (A) is legal, or otherwise, fault (Fault) information is returned to the server and the update process is stopped.

In an embodiment, the code A may be stored in the trusted client device. In this step, verifying whether the signature SIG_SK_{A2} (A) of the code A is legal according to PK_{A2} may include: performing decryption on the received signature SIG_SK_{A2} (A) by using PK_{A2} to obtain the code A, comparing the decrypted code A with the locally stored code A, and if the two are identical, determining that the signature SIG_SK_{A2} (A) is legal.

In another embodiment, if the code A is also received in step 210, the decrypted code A may be compared with the received code A in this step.

In step 250, PK_{A1} stored in the trusted client device is updated to be PK_{A2}, the received signature SIG_SK_{A2} (A) of the code A of the software is stored, and a new signature SIG_MK (PK_{A2}) of a software signature public key is obtained from TPM.

Preferably, if a joint signature of software signature public keys corresponding to multiple softwares is stored in the trusted client device, such as SIG MK (PK_{A1}, PK_{B1}), and only PK_{A1} is updated, the new signature of the software signature public keys acquired in this step is SIG_MK (PK_{A2}, PK_{B1}). If PK_{A1} and PK_{B1} are updated simultaneously, the new signature of the software signature public keys acquired in this step is SIG_MK (PK_{A2}, PK_{B2}).

Further, if the code A is also received by the trusted client device, the code A may also be stored in this step.

In the key updating method of this embodiment, a public key is updated by controlling the TPM remotely. Further, this method is simple, since the software can be installed by only determining whether the locally stored public key is consistent with the public key transmitted by the server by comparing and verifying the signature of the software package.

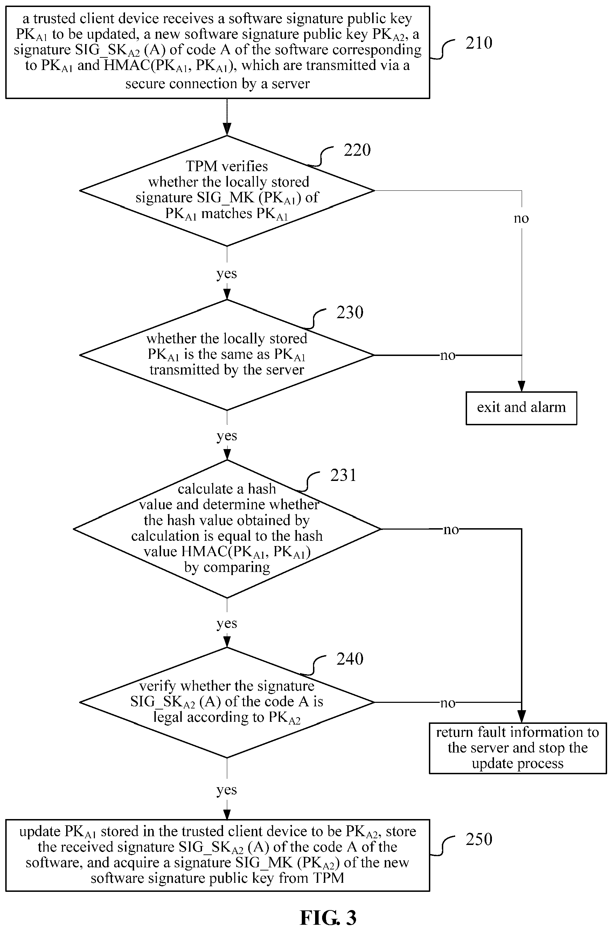

In order to further improve security, another embodiment of the invention provides a method for updating a software key. As shown in FIG. 3, the method includes following steps.

The steps in this embodiment are essentially the same as steps 210 to 250, except for the difference as below.

In step 210, the trusted client device further receives a hash value HMAC (PK_{A1}, PK_{A1}) of the software encryption public key transmitted by the server, the hash value is obtained by performing calculation on the software signature public key PK_{A1} to be updated and the new software signature public key PK_{A2} by using a pre-shared key PSK and a keyed hash algorithm, and the pre-shared key PSK is disposed in the trusted client device and the server in advance.

The keyed hash algorithm may be any keyed hash algorithms in the conventional technology, such as a keyed-hash message authentication code (Keyed-Hash Message Authentication Code, HMAC).

Furthermore, in step 230 of this embodiment, step 231 is performed if the trusted client device determines that the locally stored PK_{A1} is the same as PK_{A1} transmitted by the server by comparing.

In step 231, the trusted client device performs calculation on PK_{A1} and PK_{A2} by using the pre-shared key PSK and the keyed hash algorithm that is the same as that used by the server to obtain a hash value, determines whether the hash value obtained by calculation is equal to the hash value received in step 210 by comparing, step 240 is performed if the hash value obtained by calculation is equal to the hash value received in step 210, or otherwise, fault information is returned to the server and the update process is stopped.

In this embodiment, it may be detected whether there is a fault in the received PK_{A1} and PK_{A2}, for preventing PK_{A1} and PK_{A2} from being replaced, and further improving system security. Furthermore, the security of the keyed hash algorithm can further provide the security of the verification.

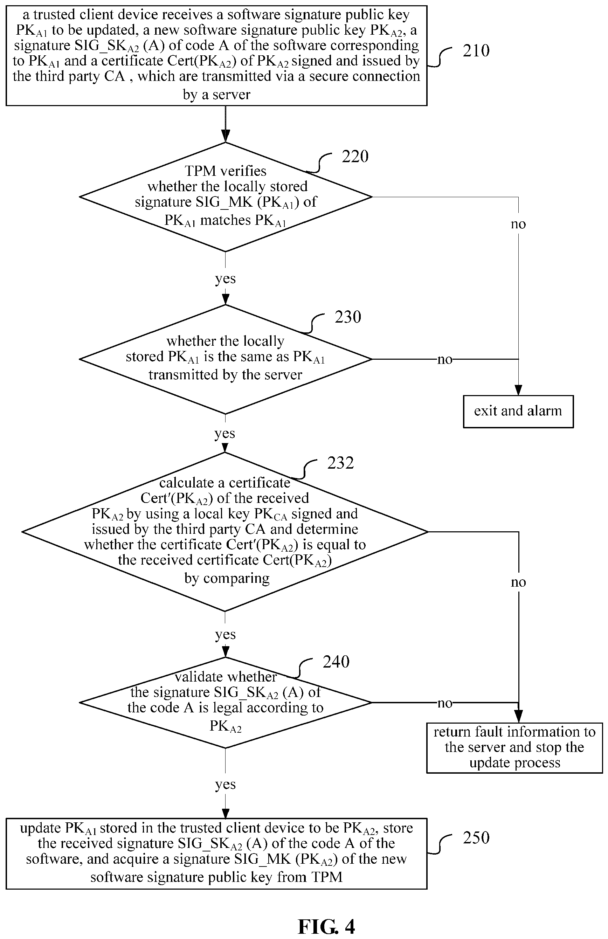

In order to further improve security, another embodiment of the invention provides a method for updating a software key. As shown in FIG. 4, the method includes the following steps.

The steps in this embodiment are essentially the same as steps 210 to 250, except for the difference as below.

In step 210, the trusted client device further receives a certificate Cert(PK_{A2}) of PK_{A2} signed and issued by a third party certificate authority (Certificate Authority, CA) and transmitted by the server, and the certificate Cert(PK_{A2}) is obtained by performing encryption by using the key PK_{CA} signed and issued by the third party CA.

In step 230, step 232 is performed if the trusted client device determines that the locally stored PK_{A1} is the same as PK_{A1} transmitted by the server by comparing.

In step 232, the trusted client device performs encryption on the received PK_{A2} by using a certificate PK_{CA} signed and issued by the third party CA and stored in the trusted client device to obtain a certificate Cert'(PK_{A2}) of PK_{A2}, compares the certificate Cert'(PK_{A2}) obtained by encryption by the trusted client device with the received certificate Cert(PK_{A2}), step 240 is performed if the certificate Cert'(PK_{A2}) obtained by encryption by the trusted client device is equal to the received certificate Cert(PK_{A2}), or otherwise, fault information is returned to the server and the update process is stopped.

In this embodiment, it may be detected whether there is a fault in the received PK_{A1} and PK_{A2}, for preventing PK_{A1} and PK_{A2} from being replaced, and further improving system security. Furthermore, in the method of presetting a third party CA certificate in the trusted client device, disposing a pre-shared key in the server in advance is not required.

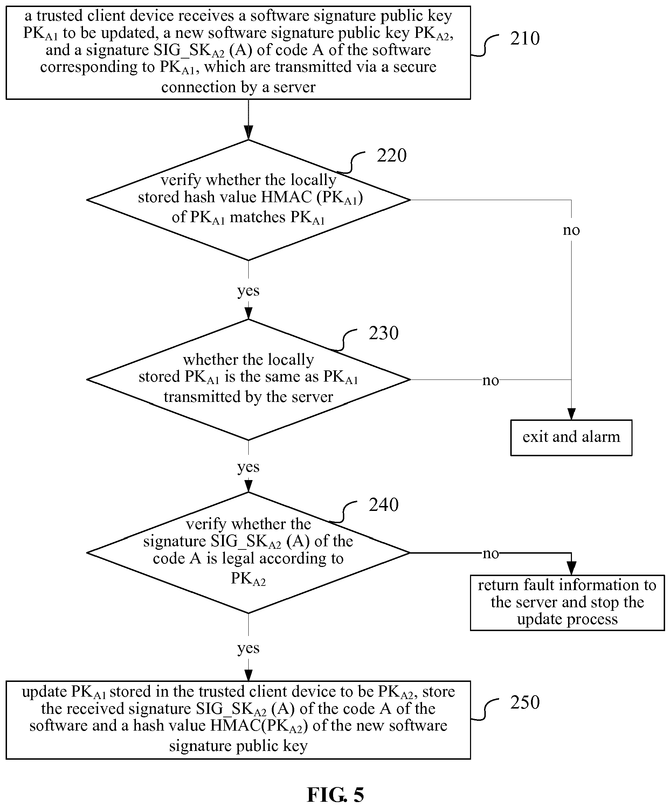

Another embodiment of the invention provides a method for updating a software key. As shown in FIG. 5, the method includes the following steps.

The steps in this embodiment are essentially the same as steps 210 to 250, except for the difference as below.

In step 220, the trusted client device verifies whether the locally stored hash value HMAC(PK_{A1}) of PK_{A1} matches with PK_{A1} by TPM, step 230 is performed if the locally stored hash value HMAC(PK_{A1}) of PK_{A1} matches with PK_{A1}, or otherwise, the method is ended and alarming is performed.

In this step, a hash value HMAC'(PK_{A1}) may be obtained by performing calculation on the stored PK_{A1} by using a hash algorithm, and the HMAC'(PK_{A1}) obtained by calculation is compared with the stored hash value HMAC (PK_{A1}). If the two are identical, HMAC(PK_{A1}) matches with PK_{A1}.

The hash algorithm may be a keyed hash algorithm, or may be a common hash algorithm.

In step 250, PK_{A1} stored in the trusted client device is updated to be PK_{A2}, and a hash value HMAC(PK_{A2}) of the new software signature public key is stored.

In this embodiment, a symmetric cryptograph mechanism (i.e., hash algorithm) is used to protect the locally stored key verification information, which improves system efficiency compared with the method using an asymmetric cryptograph mechanism (i.e., signature algorithm). The security of the hash algorithm can provide the security of the verification.

Furthermore, since the hash value is stored in this embodiment and the space occupied by the hash value is less than that occupied by the signature value, the storage space of the persistent memory inside the TPM is further saved in the embodiment. Moreover, the HMAC value may be stored in the storage of the trusted client device rather than be stored in the TPM, the storage space of the persistent memory inside the TPM is further saved.

Further, this embodiment may be combined with the embodiments described above. For example, step 231 and/or step 232 may be further included after step 230 and before step 240. If both step 231 and step 232 are included, the sequence for performing steps 231 and 232 may be arbitrary.

The above is some of embodiments. The invention is not limited to the embodiments described above, and may have other transformation forms. For example, in step 210, a HMAC value of a new key to be updated may be transmitted, and in this case, the trusted client device receives a software check key, which is used to perform calculation to obtain a hash value of the code A of the software. A pre-shared key used to encrypt the new key is preset in the trusted client device and the server, thereby verifying legality of the received new key and so on.

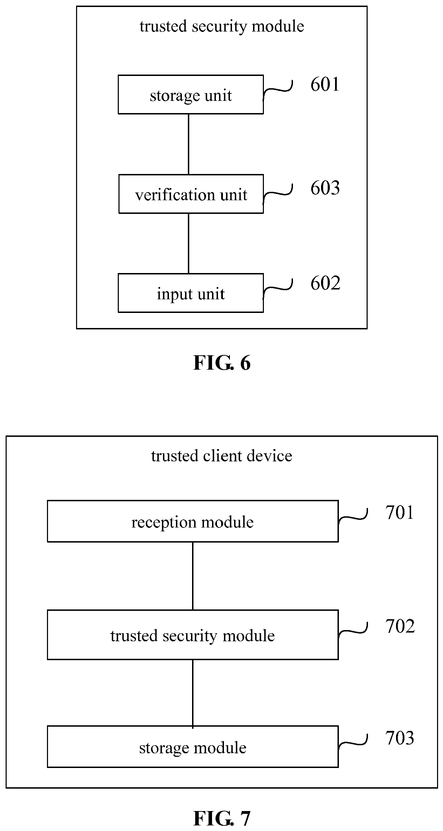

Another embodiment of the invention further provides a trusted security module capable of performing the method for updating a software key of any embodiments described above. As shown in FIG. 6, the trusted security module includes a storage unit 601, an input unit 602 and a verification unit 603.

The storage unit 601 is configured to store a first software signature public key to be updated.

The input unit 602 is configured to receive key information and verification information corresponding to a software, where the key information includes a first software signature public key and a second software signature public key, the verification information includes software verification information.

The verification unit 603 is configured to verify whether the software verification information received by the input unit 602 is legal if the legal first software signature public key corresponding to the software and stored in the storage unit 601 is consistent with the first software signature public key received by the input unit 602; and update the legal first software signature public key corresponding to the software and stored in the storage unit 601 to be the second software signature public key received by the input unit 602 if the software verification information is legal.

In this embodiment of the invention, a software signature public key on the trusted client device can be updated remotely, thereby avoiding the problem that an invalid key can not be updated and the problem that the trusted client device can not be normally started due to the change of the software signature key.

The storage unit 601 is further configured to store first key verification information, where the first key verification information is a joint signature of a software signature public key of one or more software on the trusted client device.

The verification unit 603 is configured to verify whether the first key verification information stored in the storage unit 601 matches with the first software signature public key stored in the storage unit 601, and if the first key verification information stored in the storage unit 601 matches with the first software signature public key stored in the storage unit 601, determine that the first software signature public key stored in the storage unit 601 is legal, and verify legality of the software verification information.

The verification unit 603 is further configured to acquire first key verification information about the second software signature public key, and update the first key verification information stored in the storage unit 601 to be the first key verification information about the second software signature public key.

The input unit 602 is configured to receive the software verification information which includes a first signature value of a code of the software, where the first signature value is obtained by performing calculation on the code of the software by using a signature algorithm and a private key corresponding to the second software signature public key.

The input unit 602 is further configured to receive the code of the software.

The verification unit 603 is configured to perform calculation on the received first signature value by using the second software signature public key and the signature algorithm; compare a calculation result with the code read from the input unit 602, and if the calculation result is the same as the code read from the input unit 602, determine that the software verification information is legal.

The verification unit 603 is further configured to perform calculation on the code of the software by using a first key stored in the storage unit 601 and a keyed hash algorithm to obtain a first hash value, and transmit the first hash value to the storage unit 601.

The storage unit 601 is further configured to store the first key and the first hash value.

The storage unit 601 is further configured to store a pre-shared key; and
the input unit 602 is configured to receive the verification information which includes second key verification information; the second key verification information includes a second hash value of the first software signature public key and the second software signature public key; the second hash value is obtained by the server by performing calculation on the first software signature public key and the second software signature public key by using the preset pre-shared key and a second keyed hash algorithm; the verification unit 603 is configured to , if the legal first software signature public key corresponding to the software and stored in the storage unit 601 is consistent with the first software signature public key received by the input unit 602, perform calculation on the first software signature public key and the second software signature public key by using the pre-shared key stored in the storage unit 601 and the predetermined second keyed hash algorithm to obtain a second hash value, determine whether the second hash value obtained by calculation is equal to the received second hash value by comparing, and if the second hash value obtained by calculation is equal to the received second hash value, verify legality of the software verification information.

Alternatively,
the storage unit 601 is further configured to store a key PK_{CA} signed and issued by a third party CA; and
the input unit 602 is configured to receive the verification information which includes second key verification information, the second key verification information includes a certificate Cert(PK_{A2}) of the second software signature public key PK_{A2} signed and issued by the third party CA, where the certificate Cert(PK_{A2}) is obtained by performing encryption by using the key PK_{CA} signed and issued by the third party CA; the verification unit 603 is configured to perform calculation on the received second software signature public key by using the key PK_{CA} signed and issued by the third party CA to obtain a certificate Cert'(PK_{A2}) if the legal first software signature public key corresponding to the software and stored in the storage unit 601 is consistent with the first software signature public key received by the input unit 602, compare the certificate Cert'(PK_{A2}) obtained by calculation with the received certificate Cert(PK_{A2}), and verify legality of the software verification information if the certificate Cert'(PK_{A2}) obtained by calculation is equal to the received certificate Cert(PK_{A2}).

The trusted security module may be a trusted platform module TPM. However, the trusted security module is not limited to the TPM, and may be any trusted security module having the similar function.

In the embodiment, the check mechanism for the software signature public key update is also enhanced, to avoid a wrong update due to an unexpected event or a malicious code tamper caused by an intentional attack, efficiently prevent the code from being tampered by an illegal third party and eliminate potential threats caused by system security vulnerability.

Another embodiment of the invention further provides a trusted client device capable of performing the method for updating a software key of any embodiments described above. As shown in FIG. 7, the trusted client device includes a reception module 701 and the trusted security module 702 as described in the above embodiments.

The reception module 701 is configured to receive key information and verification information corresponding to a software and transmitted by a server, and transmit the key information and the verification information to the trusted security module 702, where the key information includes a software signature public key to be updated and a new software signature public key, and the verification information includes software verification information.

The trusted security module 702 is as the one described in the above embodiments.

Specifically,
the trusted security module 702 is configured to store the software signature key corresponding to the software, verify whether the software verification information is legal if the legal first software signature public key corresponding to the software and stored in the trusted security module 702 is consistent with the received first software signature public key; and update the legal first software signature public key corresponding to the software and stored in the trusted security module 702 to be the second software signature public key if the software verification information is legal.

It should be noted that the trusted security module 702 may store a software signature public key of one or more software.

The reception module 701 is configured to receive, via a secure connection, the key information and the verification information transmitted by the server.

The trusted client device further includes a storage module 703, and the storage module 703 is configured to store first key verification information.

The trusted security module 702 is configured to acquire the first key verification information stored in the storage module 703 if the legal first software signature public key corresponding to the software of one or more software stored in the trusted security module 702 is consistent with the received first software signature public key, verify whether the first key verification information matches with the first software signature public key stored in the trusted security module 702, determines that the first software signature public key stored in the trusted security module 702 is legal if the first key verification information matches with the first software signature public key stored in the trusted security module 702, and verify legality of the software verification information.

The trusted security module 702 is further configured to acquire first key verification information about the second software signature public key, and transmit the first key verification information about the second software signature public key to the storage module 703.

The storage module 703 is further configured to update the first key verification information to be the first key verification information about the second software signature public key.

The first key verification information is a joint signature of a software signature public key of one or more software on the trusted client device.

The reception module 701 is configured to receive the software verification information which includes a first signature value of a code of the software, and transmit the received software verification information to the trusted security module 702, the first signature value is obtained by the server by performing calculation on the code of the software by using a signature algorithm and a private key corresponding to the second software signature public key, the signature algorithm is agreed between the server and the trusted client device in advance.

The trusted security module 702 is configured to acquire the code of the software, and perform calculation on the first signature value by using the second software signature public key and the signature algorithm; compare a calculation result with the acquired code of the software, and determine that the software verification information is legal if the calculation result is the same as the acquired code of the software.

The storage module 703 is further configured to store the received first signature value of the code of the software.

Alternatively, the trusted security module 702 is further configured to perform calculation on the code of the software by using a key pre-stored in the trusted client device and a first keyed hash algorithm to obtain a first hash value, and store the first hash value or store the first hash value in the storage module 703.

The storage module 703 is further configured to store the code of the software.

Alternatively, the reception module 701 is further configured to receive the code of the software, and transmit the code of the software to the storage module 703.

The trusted security module 702 is further configured to store a pre-shared key.

The reception module 702 is further configured to receive the verification information which includes second key verification information; the second key verification information includes a second hash value of the first software signature public key and the second software signature public key; the second hash value is obtained by the server by performing calculation on the first software signature public key and the second software signature public key by using the preset pre-shared key and a second keyed hash algorithm.

The trusted security module 702 is configured to perform calculation on the first software signature public key and the second software signature public key by using the stored pre-shared key and the predetermined second keyed hash algorithm to obtain a second hash value if the legal first software signature public key corresponding to the software and stored in the trusted security module 702 is consistent with the received first software signature public key, determine whether the second hash value obtained by calculation is equal to the received second hash value by comparing, and verify legality of the software verification information if the second hash value obtained by calculation is equal to the received second hash value.

Alternatively, the trusted security module 702 is further configured to store a key PK_{CA} signed and issued by a third party CA.

The reception module 702 is further configured to receive the verification information which includes the second key verification information, the second key verification information includes a certificate Cert(PK_{A2}) of the second software signature public key PK_{A2} signed and issued by the third party CA, where the certificate Cert(PK_{A2}) is obtained by performing encryption by using the key PK_{CA} signed and issued by the third party CA.

The trusted security module 702 is configured to perform calculation on the received second software signature public key by using the key PK_{CA} signed and issued by the third party CA to obtain a certificate Cert'(PK_{A2}) if the legal first software signature public key corresponding to the software and stored in the trusted security module 702 is consistent with the received first software signature public key, compare the certificate Cert'(PK_{A2}) obtained by calculation with the received certificate Cert(PK_{A2}), and verify legality of the software verification information if the certificate Cert'(PK_{A2}) obtained by calculation is equal to the received certificate Cert(PK_{A2}).

The trusted security module may be a trusted platform module TPM. However, the trusted security module is not limited to the TPM, and may be any trusted security module having the similar function.

The trusted client device may be a network device or a user equipment with trusted environment TrE.

It should be noted that in the embodiments of the trusted client device and the trusted security module described above, the division of the functional modules is only illustrative, and in actual application, the above functions may be implemented by distributing these functions to different functional modules according to requirements, for example, considering configuration requirements of corresponding hardware or convenience of software implementations, i.e., the trusted security module is divided into different functional modules to implement all or part of functions described above. Furthermore, in actual application, corresponding functional modules in the embodiments may be implemented by corresponding hardware.

It should be noted that since contents such as information interaction between respective modules/units of the above device and execution processes of respective modules/units of the above device are based on the same concept as the method embodiments of the invention, and have a same technical effect as that of the method embodiments of the invention, the specific contents may refer to the description of the method embodiments of the invention, which is not repeated here.

It may be understood by those skilled in the art that all or part of the steps in each method of the embodiments described above can be implemented by a program instructing corresponding hardware. The program may be stored in a computer readable storage media, and the storage media may include a read only memory (ROM, Read Only Memory), a random access memory (RAM, Random Access Memory), a magnetic disk or a compact disk or the like.

The method, the user equipment and the base station provided in the embodiments of the invention are described in detail above. The principle and embodiments of the invention are explained herein using specific examples, and the above description of the embodiments is only used to facilitate understanding of the methods of the invention and the core idea thereof. In addition, some changes to specific embodiments and application scope may be made by those skilled in the art according to the concept of the invention. In summary, the content of the specification should not be interpreted as limiting the invention.

## Claims

1. A method for updating a software key, comprising:
receiving (110, 210), by a trusted client device, key information and verification information corresponding to a software and transmitted by a server, wherein the key information comprises a first software signature public key to be updated and a new second software signature public key, and the verification information comprises software verification information;
verifying whether a legal first software signature public key that corresponds to the software and is stored in the trusted client device is consistent with the received first software signature public key;
verifying (120, 240) whether the software verification information is legal if the legal first software signature public key that corresponds to the software and is stored in the trusted client device is consistent with the received first software signature public key; and
updating (130, 250) the legal first software signature public key that corresponds to the software and is stored in the trusted client device to be the second software signature public key if the software verification information is legal.

2. The method according to claim 1, wherein
receiving, by the trusted client device, the key information and the verification information transmitted by the server comprises: receiving, by the trusted client device and via a secure connection, the key information and the verification information transmitted by the server.

3. The method according to claim 1 or 2, wherein
verifying whether the software verification information is legal if the legal first software signature public key that corresponds to the software and is stored in the trusted client device is consistent with the received first software signature public key comprises:
verifying, by the trusted client device, whether pre-stored first key verification information matches with the stored first software signature public key, determining that the first software signature public key stored in the trusted client device is legal if the pre-stored first key verification information matches with the stored first software signature public key, and verifying legality of the software verification information; and
updating the legal first software signature public key that corresponds to the software and is stored in the trusted client device to be the second software signature public key further comprises: acquiring first key verification information about the second software signature public key, and updating the pre-stored first key verification information to be the first key verification information about the second software signature public key.

4. The method according to claim 3, wherein
the first key verification information is a joint signature of a software signature public key of one or more software on the trusted client device.

5. The method according to claim 1, 2, 3 or 4, wherein
the software verification information comprises a first signature value of a code of the software, the first signature value is obtained by the server by performing calculation on the code of the software by using a signature algorithm and a private key corresponding to the second software signature public key, the signature algorithm is agreed between the server and the trusted client device in advance; and
verifying legality of the software verification information comprises:
acquiring the code of the software, performing calculation on the first signature value by using the second software signature public key and the signature algorithm, comparing a calculation result with the acquired code of the software, and determining that the software verification information is legal if the calculation result is the same as the acquired code of the software.

6. The method according to claim 5, further comprising: after updating the legal first software signature public key that corresponds to the software and is stored in the trusted client device to be the second software signature public key,
storing the received first signature value of the code of the software, or
obtaining a first hash value by performing calculation on the code of the software by using a key pre-stored in the trusted client device and a first keyed hash algorithm, and storing the first hash value.

7. The method according to any one of claims 1 to 3, wherein the verification information further comprises second key verification information;
the second key verification information comprises a second hash value of the first software signature public key and the second software signature public key; verifying whether the software verification information is legal if the legal first software signature public key that corresponds to the software and is stored in the trusted client device is consistent with the received first software signature public key comprises: if the legal first software signature public key that corresponds to the software and is stored in the trusted client device is consistent with the received first software signature public key, performing, by the trusted client device, calculation on the first software signature public key and the second software signature public key by using the pre-shared key and the second keyed hash algorithm to obtain a third hash value, determining whether the third hash value is equal to the second hash value by comparing, and verifying legality of the software verification information if the third hash value is equal to the second hash value;
and/or
the second key verification information comprises a certificate Cert(PK_{A2}) of the second software signature public key PK_{A2} signed and issued by a third party certificate authority, CA; and verifying whether the software verification information is legal if the legal first software signature public key that corresponds to the software and is stored in the trusted client device is consistent with the received first software signature public key comprises: if the legal first software signature public key that corresponds to the software and is stored in the trusted client device is consistent with the received first software signature public key, performing, by the trusted client device, calculation on the received second software signature public key by using a key PK_{CA} signed and issued by the third party CA and stored in the trusted client device to obtain a certificate Cert'(PK_{A2}), comparing the certificate Cert'(PK_{A2}) obtained by calculation with the received certificate Cert(PK_{A2}), and verifying legality of the software verification information if the certificate Cert'(PK_{A2}) obtained by calculation is equal to the received certificate Cert(PK_{A2}).

8. The method according to claim 7, wherein
the second hash value is obtained by the server by performing calculation on the first software signature public key and the second software signature public key by using the preset pre-shared key and the second keyed hash algorithm;
the second keyed hash algorithm is agreed between the trusted client device and the server in advance; and
the pre-shared key is preset in the trusted client device and the server.

9. A trusted security module, comprising a storage unit (601), an input unit (602) and a verification unit (603), wherein
the storage unit (601) is configured to store a legal first software signature public key corresponding to a software;
the input unit (602) is configured to receive key information and verification information corresponding to the software, wherein the key information comprises a first software signature public key to be updated and a new second software signature public key, and the verification information comprises software verification information; and
the verification unit (603) is configured to verify whether a legal first software signature public key that corresponds to the software and is stored in the storage unit (601) is consistent with the first software signature public key received by the input unit (602); verify whether the software verification information received by the input unit (602) is legal if the legal first software signature public key that corresponds to the software and is stored in the storage unit (601) is consistent with the first software signature public key received by the input unit (602); and update the legal first software signature public key that corresponds to the software and is stored in the storage unit (601) to be the second software signature public key received by the input unit (602) if the software verification information is legal.

10. The trusted security module according to claim 9, wherein
the storage unit (601) is further configured to store first key verification information;
the verification unit (603) is configured to verify whether the first key verification information stored in the storage unit (601) matches with the first software signature public key stored in the storage unit (601), determine that the first software signature public key stored in the storage unit (601) is legal if the first key verification information stored in the storage unit (601) matches with the first software signature public key stored in the storage unit (601), and verify legality of the software verification information; and
the verification unit (603) is further configured to acquire first key verification information about the second software signature public key, and update the first key verification information stored in the storage unit (601) to be the first key verification information about the second software signature public key.

11. The trusted security module according to claim 10, wherein
the storage unit (601) is configured to store a joint signature of a software signature public key of one or more software on the trusted client device as the first key verification information.

12. The trusted security module according to claim 9, 10 or 11, wherein
the input unit (602) is configured to receive the software verification information which comprises a first signature value of a code of the software, wherein the first signature value is obtained by performing calculation on the code of the software by using a signature algorithm and a private key corresponding to the second software signature public key; and
the verification unit (603) is configured to acquire the code of the software from the input unit (602), perform calculation on the received first signature value by using the second software signature public key and the signature algorithm, compare a calculation result with the code read from the input unit (602), and determine that the software verification information is legal if the calculation result is the same as the code read from the input unit (602).

13. The trusted security module according to claim 12, wherein
the verification unit (603) is further configured to perform calculation on the code of the software by using a first key stored in the storage unit (601) and a first keyed hash algorithm to obtain a first hash value, and transmit the first hash value to the storage unit (601); and
the storage unit (601) is further configured to store the first key and the first hash value.

14. The trusted security module according to any one of claims 9 to 13, wherein
the storage unit (601) is further configured to store a pre-shared key; and
the input unit (602) is configured to receive the verification information which comprises second key verification information; the second key verification information comprises a second hash value of the first software signature public key and the second software signature public key; the second hash value is obtained by the server by performing calculation on the first software signature public key and the second software signature public key by using the pre-shared key preset and a second keyed hash algorithm; the verification unit (603) is configured to perform calculation on the first software signature public key and the second software signature public key by using the pre-shared key stored in the storage unit (601) and the second keyed hash algorithm predetermined to obtain a second hash value if the legal first software signature public key that corresponds to the software and is stored in the storage unit (601) is consistent with the first software signature public key received by the input unit (602), determine whether the second hash value obtained by calculation is equal to the received second hash value by comparing, and verify legality of the software verification information if the second hash value obtained by calculation is equal to the received second hash value;
or,
the storage unit (601) is further configured to store a key PK_{CA} signed and issued by a third party certificate authority, CA; and
the input unit (602) is configured to receive the verification information which comprises second key verification information, the second key verification information comprises a certificate Cert(PK_{A2}) of the second software signature public key PK_{A2} signed and issued by the third party CA, wherein the certificate Cert(PK_{A2}) is obtained by performing encryption by using the key PK_{CA} signed and issued by the third party CA; the verification unit (603) is configured to perform calculation on the received second software signature public key by using the key PK_{CA} signed and issued by the third party CA to obtain a certificate Cert'(PK_{A2}) if the legal first software signature public key that corresponds to the software and is stored in the storage unit (601) is consistent with the first software signature public key received by the input unit (602), compare the certificate Cert'(PK_{A2}) obtained by calculation with the received certificate Cert(PK_{A2}), and verify legality of the software verification information if the certificate Cert'(PK_{A2}) obtained by calculation is equal to the received certificate Cert(PK_{A2}).

15. A trusted client device comprising a reception module (701) and the trusted security module (702) according to any one of claims 9 to 14, wherein
the reception module (701) is configured to receive key information and verification information corresponding to a software and transmitted by a server, and transmit the key information and the verification information to the trusted security module (702), wherein the key information comprises a software signature public key to be updated and a new software signature public key, and the verification information comprises software verification information.

## Patentansprüche

1. Verfahren zum Aktualisieren eines Softwareschlüssels, umfassend:
Empfangen (110, 210) von Schlüsselinformationen und Verifizierungsinformationen, die einer Software entsprechen und von einem Server übertragen werden, durch eine vertrauenswürdige Client-Vorrichtung, wobei die Schlüsselinformationen einen ersten öffentlichen Schlüssel einer Softwaresignatur, der zu aktualisieren ist, und einen neuen zweiten öffentlichen Schlüssel der Softwaresignatur umfassen; und die Verifizierungsinformationen Softwareverifizierungsinformationen umfassen;
Verifizieren, ob ein legaler erster öffentlicher Schlüssel der Softwaresignatur, welcher der Software entspricht und in der vertrauenswürdigen Client-Vorrichtung gespeichert ist, mit dem empfangenen ersten öffentlichen Schlüssel der Softwaresignatur konsistent ist;
Verifizieren (120, 240), ob die Softwareverifizierungsinformationen legal sind, falls der legale erste öffentliche Schlüssel der Softwaresignatur, der der Software entspricht und in der vertrauenswürdigen Client-Vorrichtung gespeichert ist, mit dem empfangenen ersten öffentlichen Schlüssel der Softwaresignatur konsistent ist; und
Aktualisieren (130, 250) des legalen ersten öffentlichen Schlüssels der Softwaresignatur, welcher der Software entspricht und in der vertrauenswürdigen Client-Vorrichtung gespeichert ist, um der zweite öffentliche Schlüssel der Softwaresignatur zu werden, falls die Softwareverifizierungsinformationen legal sind.

2. Verfahren nach Anspruch 1, wobei
Empfangen der Schlüsselinformationen und der Verifizierungsinformationen, die von dem Server übertragen werden, durch die vertrauenswürdige Client-Vorrichtung umfasst: Empfangen der Schlüsselinformationen und der Verifizierungsinformationen, die durch den Server übertragen werden, durch die vertrauenswürdige Client-Vorrichtung und über eine sichere Verbindung.

3. Verfahren nach Anspruch 1 oder 2, wobei
Verifizieren, ob die Softwareverifizierungsinformationen legal sind, falls der legale erste öffentliche Schlüssel der Softwaresignatur, der der Software entspricht und in der vertrauenswürdigen Client-Vorrichtung gespeichert ist, mit dem empfangenen ersten öffentlichen Schlüssel der Softwaresignatur konsistent ist, umfasst:
Verifizieren durch die vertrauenswürdige Client-Vorrichtung, ob die vorab gespeicherten ersten Schlüsselverifizierungsinformationen zu dem gespeicherten ersten öffentlichen Schlüssel der Softwaresignatur passen, Bestimmen, dass der in der vertrauenswürdigen Client-Vorrichtung gespeicherte erste öffentliche Schlüssel der Softwaresignatur legal ist, falls die vorab gespeicherten ersten Schlüsselverifizierungsinformationen zu dem gespeicherten ersten öffentlichen Schlüssel der Softwaresignatur passen, und Verifizieren der Legalität der Softwareverifizierungsinformationen; und
Aktualisieren des legalen ersten öffentlichen Schlüssels der Softwaresignatur, welcher der Software entspricht und in der vertrauenswürdigen Client-Vorrichtung gespeichert ist, so dass er der zweite öffentliche Schlüssel der Softwaresignatur wird, ferner umfasst: Erfassen von ersten Schlüsselverifizierungsinformationen zu dem zweiten öffentlichen Schlüssel der Softwaresignatur und Aktualisieren der vorab gespeicherten ersten Schlüsselverifizierungsinformationen, so dass sie die ersten Schlüsselverifizierungsinformationen zu dem zweiten öffentlichen Schlüssel der Softwaresignatur werden.

4. Verfahren nach Anspruch 3, wobei
die ersten Schlüsselverifizierungsinformationen eine gemeinsame Signatur eines öffentlichen Schlüssels der Softwaresignatur von einer oder mehreren Softwares auf der vertrauenswürdigen Client-Vorrichtung ist.

5. Verfahren nach Anspruch 1, 2, 3 oder 4, wobei
die Softwareverifizierungsinformationen einen ersten Signaturwert eines Codes der Software umfassen, wobei der erste Signaturwert durch den Server erhalten wird, indem Berechnung mit dem Code der Software unter Verwendung eines Signaturalgorithmus und eines privaten Schlüssels durchgeführt wird, welcher dem zweiten öffentlichen Schlüssel der Softwaresignatur entspricht, wobei der Signaturalgorithmus zwischen dem Server und der vertrauenswürdigen Client-Vorrichtung vorab abgesprochen wurde; und
Verifizieren der Legalität der Softwareverifizierungsinformationen umfasst:
Erfassen des Codes der Software, Durchführung von Berechnung an dem ersten Signaturwert unter Verwendung des zweiten öffentlichen Schlüssels der Softwaresignatur und des Signaturalgorithmus, Vergleichen eines Rechenergebnisses mit dem erfassten Code der Software, und Bestimmen, dass die Softwareverifizierungsinformationen legal sind, falls das Rechenergebnis das gleiche wie der erfasste Code der Software ist.

6. Verfahren nach Anspruch 5, ferner umfassend:
nach dem Aktualisieren des legalen ersten öffentlichen Schlüssels der Softwaresignatur, welcher der Software entspricht und in der vertrauenswürdigen Client-Vorrichtung gespeichert ist, so dass er der zweite öffentliche Schlüssel der Softwaresignatur wird,
Speichern des empfangenen ersten Signaturwerts des Codes der Software, oder
Erhalten eines ersten Hash-Werts, indem Berechnung mit dem Code der Software unter Verwendung eines Schlüssels, der vorab in der vertrauenswürdigen Client-Vorrichtung gespeichert wurde, und eines ersten eingegebenen Hash-Algorithmus durchgeführt wird, und Speichern des ersten Hash-Werts.

7. Verfahren nach einem der Ansprüche 1 bis 3, wobei die Verifizierungsinformationen ferner zweite Schlüsselverifizierungsinformationen umfassen;
wobei die zweiten Schlüsselverifizierungsinformationen einen zweiten Hash-Wert des ersten öffentlichen Schlüssels der Softwaresignatur und den zweiten öffentlichen Schlüssel der Softwaresignatur umfassen; Verifizieren, ob die Softwareverifizierungsinformationen legal sind, falls der legale erste öffentliche Schlüssel der Softwaresignatur, welcher der Software entspricht und in der vertrauenswürdigen Client-Vorrichtung gespeichert ist, mit dem empfangenen ersten öffentlichen Schlüssel der Softwaresignatur konsistent ist, umfasst: falls der legale erste öffentliche Schlüssel der Softwaresignatur, welcher der Software entspricht und in der vertrauenswürdigen Client-Vorrichtung gespeichert ist, mit dem empfangenen ersten öffentlichen Schlüssel der Softwaresignatur konsistent ist, Durchführen der Berechnung mit dem ersten öffentlichen Schlüssel der Softwaresignatur und dem zweiten öffentlichen Schlüssel der Softwaresignatur unter Verwendung des vorab vereinbarten Schlüssels und des zweiten eingegebenen Hash-Algorithmus durch die vertrauenswürdige Client-Vorrichtung, um einen dritten Hash-Wert zu erhalten, Bestimmen, ob der dritte Hash-Wert gleich dem zweiten Hash-Wert ist, durch Vergleichen, und Verifizieren der Legalität der Softwareverifizierungsinformationen, falls der dritte Hash-Wert gleich dem zweiten Hash-Wert ist;
und/oder
wobei die zweiten Schlüsselverifizierungsinformationen ein Zertifikat Cert(PK_{A**²**}) des zweiten öffentlichen Schlüssels der Softwaresignatur PK_{A**2**} umfassen, das von einer Drittpartei-Zertifizierungsstelle, CA, signiert und ausgestellt ist; und Verifizieren, ob die Softwareverifizierungsinformationen legal sind, falls der legale erste öffentliche Schlüssel der Softwaresignatur, welcher der Software entspricht und in der vertrauenswürdigen Client-Vorrichtung gespeichert ist, mit dem empfangenen ersten öffentlichen Schlüssel der Softwaresignatur konsistent ist, umfasst: falls der legale erste öffentliche Schlüssel der Softwaresignatur, welcher der Software entspricht und in der vertrauenswürdigen Client-Vorrichtung gespeichert ist, mit dem empfangenen ersten öffentlichen Schlüssel der Softwaresignatur konsistent ist, Durchführen von Berechnung mit dem empfangenen zweiten öffentlichen Schlüssel der Softwaresignatur unter Verwendung eines Schlüssels PK_{CA}, der von der Drittpartei-CA signiert und ausgegeben und in der vertrauenswürdigen Client-Vorrichtung gespeichert ist, durch die vertrauenswürdige Client-Vorrichtung, um ein Zertifikat Cert'(PK_{A**²**}) zu erhalten, Vergleichen des Zertifikats Cert'(PK_{A**²**}), das durch Berechnung erhalten wurde, mit dem empfangenen Zertifikat Cert(PK_{A**²**}), und Verifizieren der Legalität der Softwareverifizierungsinformationen, falls das Zertifikat Cert'(PK_{A**²**}), welches durch Berechnung erhalten wurde, gleich dem empfangenen Zertifikat Cert(PK_{A**²**}) ist.

8. Verfahren nach Anspruch 7, wobei
der zweite Hash-Wert von dem Server erhalten wird, indem Berechnung mit dem ersten öffentlichen Schlüssel der Softwaresignatur und dem zweiten öffentlichen Schlüssel der Softwaresignatur unter Verwendung des vorgewählten vorab vereinbarten Schlüssels und des zweiten eingegebenen Hash-Algorithmus durchgeführt wird;
der zweite eingegebene Hash-Algorithmus vorab zwischen der vertrauenswürdigen Client-Vorrichtung und dem Server abgesprochen wurde; und
der vorab vereinbarte Schlüssel in der vertrauenswürdigen Client-Vorrichtung und dem Server vorgewählt ist.

9. Vertrauenswürdiges Sicherheitsmodul, umfassend eine Speichereinheit (601), eine Eingabeeinheit (602) und eine Verifizierungseinheit (603), wobei
die Speichereinheit (601) konfiguriert ist, um einen legalen ersten öffentlichen Schlüssel der Softwaresignatur zu speichern, der einer Software entspricht;
die Eingabeeinheit (602) konfiguriert ist, um Schlüsselinformationen und Verifizierungsinformationen zu empfangen, die der Software entsprechen, wobei die Schlüsselinformationen einen ersten öffentlichen Schlüssel einer Softwaresignatur,
der zu aktualisieren ist, und einen neuen zweiten öffentlichen Schlüssel der Softwaresignatur umfassen; und die Verifizierungsinformationen Softwareverifizierungsinformationen umfassen; und
die Verifizierungseinheit (603) konfiguriert ist, um zu verifizieren, ob ein legaler erster öffentlicher Schlüssel der Softwaresignatur, welcher der Software entspricht und in der Speichereinheit (601) gespeichert ist, mit dem ersten öffentlichen Schlüssel der Softwaresignatur konsistent ist, der durch die Eingabeeinheit (602) erhalten wurde; zu verifizieren, ob die durch die Eingabeeinheit (602) empfangenen Softwareverifizierungsinformationen legal sind, falls der legale erste öffentliche Schlüssel der Softwaresignatur, welcher der Software entspricht und in der Speichereinheit (601) gespeichert ist, mit dem durch die Eingabeeinheit (602) empfangenen ersten öffentlichen Schlüssel der Softwaresignatur konsistent ist; und den legalen ersten öffentlichen Schlüssel der Softwaresignatur zu aktualisieren, welcher der Software entspricht und in der Speichereinheit (601) gespeichert ist, damit er der zweite öffentliche Schlüssel der Softwaresignatur wird, der durch die Eingabeeinheit (602) empfangen wurde, falls die Softwareverifizierungsinformationen legal sind.

10. Vertrauenswürdiges Sicherheitsmodul nach Anspruch 9, wobei
die Speichereinheit (601) ferner konfiguriert ist, um erste Schlüsselverifizierungsinformationen zu speichern;
die Verifizierungseinheit (603) konfiguriert ist, um zu verifizieren, ob die in der Speichereinheit (601) gespeicherten ersten Schlüsselverifizierungsinformationen zu dem ersten öffentlichen Schlüssel der Softwaresignatur passen, der in der Speichereinheit (601) gespeichert ist, zu bestimmen, dass der in der Speichereinheit (601) gespeicherte erste öffentliche Schlüssel der Softwaresignatur legal ist, falls die in der Speichereinheit (601) gespeicherten ersten Schlüsselverifizierungsinformationen zu dem ersten öffentlichen Schlüssel der Softwaresignatur passen, der in der Speichereinheit (601) gespeichert ist, und die Legalität der Softwareverifizierungsinformationen zu verifizieren; und
die Verifizierungseinheit (603) ferner konfiguriert ist, um erste Schlüsselverifizierungsinformationen zu dem zweiten öffentlichen Schlüssel der Softwaresignatur zu erfassen und die in der Speichereinheit (601) gespeicherten ersten Schlüsselverifizierungsinformationen zu aktualisieren, so dass sie die ersten Schlüsselverifizierungsinformationen zu dem zweiten öffentlichen Schlüssel der Softwaresignatur werden.

11. Vertrauenswürdiges Sicherheitsmodul nach Anspruch 10, wobei
die Speichereinheit (601) konfiguriert ist, um eine gemeinsame Signatur eines öffentlichen Schlüssels einer Softwaresignatur von einer oder mehreren Softwares auf der vertrauenswürdigen Client-Vorrichtung als erste Schlüsselverifizierungsinformationen zu speichern.

12. Vertrauenswürdiges Sicherheitsmodul nach Anspruch 9, 10 oder 11, wobei
die Eingabeeinheit (602) konfiguriert ist, um die Softwareverifizierungsinformationen zu empfangen, die einen ersten Signaturwert eines Codes der Software umfassen, wobei der erste Signaturwert erhalten wird, indem Berechnung mit dem Code der Software unter Verwendung eines Signaturalgorithmus und eines privaten Schlüssels durchgeführt wird, welcher dem zweiten öffentlichen Schlüssel der Softwaresignatur entspricht; und
die Verifizierungseinheit (603) konfiguriert ist, um den Code der Software von der Eingabeeinheit (602) zu erfassen, Berechnung an dem empfangenen ersten Signaturwert unter Verwendung des zweiten öffentlichen Schlüssels der Softwaresignatur und des Signaturalgorithmus durchzuführen, ein Rechenergebnis mit von der Eingabeeinheit (602) gelesenem Code zu vergleichen und zu bestimmen, dass die Softwareverifizierungsinformationen legal sind, falls das Rechenergebnis das gleiche wie der von der Eingabeeinheit (602) gelesene Code ist.

13. Vertrauenswürdiges Sicherheitsmodul nach Anspruch 12, wobei
die Verifizierungseinheit (603) ferner konfiguriert ist, um Berechnung mit dem Code der Software unter Verwendung eines ersten Schlüssels, der in der Speichereinheit (601) gespeichert ist, und eines ersten eingegebenen Hash-Algorithmus durchzuführen, um einen ersten Hash-Wert zu erhalten, und den ersten Hash-Wert an die Speichereinheit (601) zu übertragen; und
die Speichereinheit (601) ferner konfiguriert ist, um den ersten Schlüssel und den ersten Hash-Wert zu speichern.

14. Vertrauenswürdiges Sicherheitsmodul nach einem der Ansprüche 9 bis 13, wobei
die Speichereinheit (601) ferner konfiguriert ist, um einen vorab vereinbarten Schlüssel zu speichern; und
die Eingabeeinheit (602) konfiguriert ist, um die Verifizierungsinformationen zu empfangen, die zweite Schlüsselverifizierungsinformationen umfassen; wobei die zweiten Schlüsselverifizierungsinformationen einen zweiten Hash-Wert des ersten öffentlichen Schlüssels der Softwaresignatur und den zweiten öffentlichen Schlüssel der Softwaresignatur umfassen; der zweite Hash-Wert durch den Server erhalten wird, indem Berechnung mit dem ersten öffentlichen Schlüssel der Softwaresignatur und dem zweiten öffentlichen Schlüssel der Softwaresignatur unter Verwendung des vorgewählten, vorab vereinbarten Schlüssels und eines zweiten eingegebenen Hash-Algorithmus durchgeführt wird; die Verifizierungseinheit (603) konfiguriert ist, um Berechnung mit dem ersten öffentlichen Schlüssel der Softwaresignatur und dem zweiten öffentlichen Schlüssel der Softwaresignatur unter Verwendung des vorab vereinbarten Schlüssels, der in der Speichereinheit (601) gespeichert ist, und des zweiten eingegebenen Hash-Algorithmus durchzuführen, der vorbestimmt wurde, um einen zweiten Hash-Wert zu erhalten, falls der legale erste öffentliche Schlüssel der ersten Softwaresignatur, welcher der Software entspricht und in der Speichereinheit (601) gespeichert ist, mit dem ersten öffentlichen Schlüssel der Softwaresignatur konsistent ist, der von der Eingabeeinheit (602) empfangen wurde, durch Vergleichen zu bestimmen, ob der durch Berechnung erhaltene zweite Hash-Wert gleich dem empfangenen zweiten Hash-Wert ist, und die Legalität der Softwareverifizierungsinformationen zu verifizieren, falls der durch Berechnung erhaltene zweite Hash-Wert gleich dem empfangenen zweiten Hash-Wert ist;
oder
die Speichereinheit (601) ferner konfiguriert ist, um einen Schlüssel PK_{CA} zu speichern, der von einer Drittpartei-Zertifizierungsstelle, CA, signiert und ausgegeben ist; und
die Eingabeeinheit (602) konfiguriert ist, um die Verifizierungsinformationen zu empfangen, die zweite Schlüsselverifizierungsinformationen umfassen, wobei die zweiten Schlüsselverifizierungsinformationen ein Zertifikat Cert(PK_{A**²**}) des zweiten öffentlichen Schlüssels der Softwaresignatur PK_{A**2**} umfassen, der von der Drittpartei-CA signiert und ausgegeben wurde, wobei das Zertifikat Cert(PK_{A**²**}) erhalten wird, indem Verschlüsselung unter Verwendung des von der Drittpartei-CA signierten und ausgegebenen Schlüssels PK_{CA} durchgeführt wird; die Verifizierungseinheit (603) konfiguriert ist, um Berechnung mit dem empfangenen zweiten öffentlichen Schlüssel der Softwaresignatur unter Verwendung des von der Drittpartei-CA signierten und ausgegebenen Schlüssels PK_{CA} durchzuführen, um ein Zertifikat Cert'(PK_{A**²**}) zu erhalten, falls der legale erste öffentliche Schlüssel der Softwaresignatur, welcher der Software entspricht und in der Speichereinheit (601) gespeichert ist, konsistent mit dem ersten öffentlichen Schlüssel der Softwaresignatur ist, der von der Eingabeeinheit (602) empfangen wurde, das durch Berechnung erhaltene Zertifikat Cert'(PK_{A**²**}) mit dem empfangenen Zertifikat Cert(PK_{A**²**}) zu vergleichen und die Legalität der Softwareverifizierungsinformationen zu verifizieren, falls das durch Berechnung erhaltene Zertifikat Cert'(PK_{A**²**}) gleich dem empfangenen Zertifikat Cert(PK_{A**²**}) ist.

15. Vertrauenswürdige Client-Vorrichtung, umfassend ein Empfangsmodul (701) und das vertrauenswürdige Sicherheitsmodul (702) nach einem der Ansprüche 9 bis 14, wobei
das Empfangsmodul (701) konfiguriert ist, um Schlüsselinformationen und Verifizierungsinformationen, die einer Software entsprechen und durch einen Server übertragen werden, zu empfangen und die Schlüsselinformationen und die Verifizierungsinformationen an das vertrauenswürdige Sicherheitsmodul (702) zu übertragen, wobei die Schlüsselinformationen einen öffentlichen Schlüssel der Softwaresignatur, der zu aktualisieren ist, und einen neuen öffentlichen Schlüssel der Softwaresignatur umfassen, und wobei die Verifizierungsinformationen Softwareverifizierungsinformationen umfassen.

## Revendications

1. Procédé de mise à jour d'une clé de logiciel, comprenant :
la réception (110, 210), par un dispositif client agréé, d'informations de clé et d'informations de vérification correspondant à un logiciel et transmises par un serveur, dans lequel les informations de clé comprennent une première clé publique de signature de logiciel à mettre à jour et une nouvelle seconde clé publique de signature de logiciel, et les informations de vérification comprennent des informations de vérification de logiciel ;
le fait de vérifier si une première clé publique de signature de logiciel légale qui correspond au logiciel et qui est mémorisée dans le dispositif client agréé est cohérente ou non avec la première clé publique de signature de logiciel reçue ;
le fait de vérifier (120, 240) si les informations de vérification de logiciel sont légales ou non si la première clé publique de signature de logiciel légale qui correspond au logiciel et qui est mémorisée dans le dispositif client agréé est cohérente avec la première clé publique de signature de logiciel reçue ; et
la mise à jour (130, 250) de la première clé publique de signature de logiciel légale qui correspond au logiciel et qui est mémorisée dans le dispositif client agréé en tant que seconde clé publique de signature de logiciel si les informations de vérification de logiciel sont légales.

2. Procédé selon la revendication 1, dans lequel
la réception, par le dispositif client agréé, des informations de clé et des informations de vérification transmises par le serveur comprend : la réception, par le dispositif client agréé et par l'intermédiaire d'une connexion sécurisée, des informations de clé et des informations de vérification transmises par le serveur .

3. Procédé selon la revendication 1 ou 2, dans lequel
le fait du vérifier si les informations de vérification de logiciel sont légales ou non si la première clé publique de signature de logiciel légale qui correspond au logiciel et qui est mémorisée dans le dispositif client agréé est cohérente avec la première clé publique de signature de logiciel reçue comprend :
le fait de vérifier, par le dispositif client agréé, si des informations de vérification de première clé prémémorisées correspondent ou non à la première clé publique de signature de logiciel mémorisée, la détermination que la première clé publique de signature de logiciel mémorisée dans le dispositif client agréé est légale si les informations de vérification de première clé prémémorisées correspondent à la première clé publique de signature de logiciel mémorisée, et la vérification de la légalité des informations de vérification de logiciel ; et
la mise à jour de la première clé publique de signature de logiciel légale qui correspond au logiciel et qui est mémorisée dans le dispositif client agréé en tant que seconde clé publique de signature de logiciel comprend en outre : l'acquisition d'informations de vérification de première clé relatives à la seconde clé publique de signature de logiciel, et la mise à jour des informations de vérification de première clé prémémorisées en tant qu'informations de vérification de première clé relatives à la seconde clé publique de signature de logiciel.

4. Procédé selon la revendication 3, dans lequel
les informations de vérification de première clé sont une signature conjointe d'une clé publique de signature de logiciel d'un ou de plusieurs logiciels sur le dispositif client agréé.

5. Procédé selon la revendication 1, 2, 3 or 4, dans lequel
les informations de vérification de logiciel comprennent une première valeur de signature d'un code du logiciel, la première valeur de signature est obtenue par le serveur en exécutant un calcul sur le code du logiciel à l'aide d'un algorithme de signature et d'une clé privée correspondant à la seconde clé publique de signature de logiciel, l'algorithme de signature étant convenu à l'avance entre le serveur et le dispositif client agréé ; et
la vérification de la légalité des informations de vérification de logiciel comprend :
l'acquisition du code du logiciel, l'exécution d'un calcul sur la première valeur de signature à l'aide de la seconde clé publique de signature de logiciel et de l'algorithme de signature, la comparaison d'un résultat de calcul avec le code acquis du logiciel, et la détermination que les informations de vérification de logiciel sont légales si le résultat de calcul est identique au code acquis du logiciel.

6. Procédé selon la revendication 5, comprenant en outre : après la mise à jour de la première clé publique de signature de logiciel légale qui correspond au logiciel et qui est mémorisée dans le dispositif client agréé en tant que seconde clé publique de signature de logiciel,
la mémorisation de la première valeur de signature reçue du code du logiciel, ou l'obtention d'une première valeur de hachage en exécutant un calcul sur le code du logiciel à l'aide d'une clé prémémorisée dans le dispositif client agréé et d'un algorithme de hachage de première clé, et la mémorisation de la première valeur de hachage.

7. Procédé selon l'une quelconque des revendications 1 à 3, dans lequel les informations de vérification comprennent en outre des informations de vérification de seconde clé ;
les informations de vérification de seconde clé comprennent une deuxième valeur de hachage de la première clé publique de signature de logiciel et de la seconde clé publique de signature de logiciel ; le fait de vérifier si les informations de vérification de logiciel sont légales ou non si la première clé publique de signature de logiciel légale qui correspond au logiciel et qui est mémorisée dans le dispositif client agréé est cohérente avec la première clé publique de signature de logiciel reçue comprend : si la première clé publique de signature de logiciel légale qui correspond au logiciel et qui est mémorisée dans le dispositif client agréé est cohérente avec la première clé publique de signature de logiciel reçue, l'exécution, par le dispositif client agréé, d'un calcul sur la première clé publique de signature de logiciel et la seconde clé publique de signature de logiciel à l'aide de la clé prépartagée et de l'algorithme de hachage de deuxième clé pour obtenir une troisième valeur de hachage, le fait de déterminer si la troisième valeur de hachage est égale ou non à la deuxième valeur de hachage par comparaison, et la vérification de la légalité des informations de vérification de logiciel si la troisième valeur de hachage est égale à la deuxième valeur de hachage ; et/ou
les informations de vérification de seconde clé comprennent un certificat Cert(PK_{A2}) de la seconde clé publique de signature de logiciel PK_{A2} signé et délivré par une autorité de certification, CA, tierce ; et le fait de vérifier si que les informations de vérification de logiciel sont légales ou non si la première clé publique de signature de logiciel légale qui correspond au logiciel et qui est mémorisée dans le dispositif client agréé est cohérente avec la première clé publique de signature de logiciel reçue comprend : si la première clé publique de signature de logiciel légale qui correspond au logiciel et qui est mémorisée dans le dispositif client agréé est cohérente avec la première clé publique de signature de logiciel reçue, l'exécution, par le dispositif client agréé, d'un calcul sur la seconde clé publique de signature de logiciel reçue en utilisant un PK_{CA} signé et délivré par la CA tierce et mémorisé dans le dispositif client agréé pour obtenir un certificat Cert'(PK_{A2}), la comparaison du certificat Cert'(PK_{A2}) obtenu par calcul avec le certificat Cert(PK_{A2}) reçu, et la vérification de la légalité des informations de vérification de logiciel si le certificat Cert'(PK_{A2}) obtenu par calcul est égal au certificat Cert(PK_{A2}) reçu.

8. Procédé selon la revendication 7, dans lequel
la deuxième valeur de hachage est obtenue par le serveur en exécutant un calcul sur la première clé publique de signature de logiciel et la seconde clé publique de signature de logiciel à l'aide de la clé pré-partagée prédéfinie et de l'algorithme de hachage de deuxième clé ;
l'algorithme de hachage de deuxième clé est convenu à l'avance entre le dispositif client agréé et le serveur ; et
la clé pré-partagée est prédéfinie dans le dispositif client agréé et le serveur.

9. Module de sécurité agréé, comprenant une unité de mémorisation (601), une unité d'entrée (602) et une unité de vérification (603), dans lequel
l'unité de mémorisation (601) est configurée pour mémoriser une première clé publique de signature de logiciel légale correspondant à un logiciel ;
l'unité d'entrée (602) est configurée pour recevoir des informations de clé et des informations de vérification correspondant au logiciel, dans lequel les informations de clé comprennent une première clé publique de signature de logiciel à mettre à jour et une nouvelle seconde clé publique de signature de logiciel, et les informations de vérification comprennent des informations de vérification de logiciel ; et
l'unité de vérification (603) est configurée pour vérifier si une première clé publique de signature de logiciel légale qui correspond au logiciel et qui est mémorisée dans l'unité de mémorisation (601) est cohérente ou non avec la première clé publique de signature de logiciel reçue par l'unité d'entrée (602) ; vérifier si les informations de vérification de logiciel reçues par l'unité d'entrée (602) sont légales ou non si la première clé publique de signature de logiciel légale qui correspond au logiciel et qui est mémorisée dans l'unité de mémorisation (601) est cohérente avec la première clé publique de signature de logiciel reçues par l'unité d'entrée (602) ; et mettre à jour la première clé publique de signature de logiciel légale qui correspond au logiciel et qui est mémorisée dans l'unité de mémorisation (601) en tant que seconde clé publique de signature de logiciel reçue par l'unité d'entrée (602) si les informations de vérification de logiciel sont légales.

10. Module de sécurité agréé selon la revendication 9, dans lequel
l'unité de mémorisation (601) est configurée en outre pour mémoriser des informations de vérification de première clé ;
l'unité de vérification (603) est configurée pour vérifier si les informations de vérification de première clé mémorisées dans l'unité de mémorisation (601) correspondent ou non à la première clé publique de signature de logiciel mémorisée dans l'unité de mémorisation (601), déterminer que la première clé publique de signature de logiciel mémorisée dans l'unité de mémorisation (601) est légale si les informations de vérification de première clé mémorisées dans l'unité de mémorisation (601) correspondent à la première clé publique de signature de logiciel mémorisées dans l'unité de mémorisation (601), et vérifier la légalité des informations de vérification de logiciel ; et
l'unité de vérification (603) est configurée en outre pour acquérir des informations de vérification de première clé relatives à la seconde clé publique de signature de logiciel, et mettre à jour les informations de vérification de première clé mémorisées dans l'unité de mémorisation (601) en tant qu'informations de vérification de première clé relatives à la seconde clé publique de signature de logiciel.

11. Module de sécurité agréé selon la revendication 10, dans lequel
l'unité de mémorisation (601) est configurée pour mémoriser une signature conjointe d'une clé publique de signature de logiciel d'un ou de plusieurs logiciels sur le dispositif client agréé en tant qu'informations de vérification de première clé.

12. Module de sécurité agréé selon la revendication 9, 10 ou 11, dans lequel
l'unité d'entrée (602) est configurée pour recevoir les informations de vérification de logiciel qui comprennent une première valeur de signature d'un code du logiciel, dans lequel la première valeur de signature est obtenue en exécutant un calcul sur le code du logiciel à l'aide d'un algorithme de signature et d'une clé privée correspondant à la seconde clé publique de signature de logiciel ; et
l'unité de vérification (603) est configurée pour acquérir le code du logiciel depuis l'unité d'entrée (602), exécuter un calcul sur la première valeur de signature reçue à l'aide de la seconde clé publique de signature de logiciel et de l'algorithme de signature, comparer un résultat de calcul avec le code lu depuis l'unité d'entrée (602), et déterminer que les informations de vérification de logiciel sont légales si le résultat de calcul est identique au code lu depuis l'unité d'entrée (602).

13. Module de sécurité agréé selon la revendication 12, dans lequel
l'unité de vérification (603) est configurée en outre pour exécuter un calcul sur le code du logiciel à l'aide d'une première clé mémorisée dans l'unité de mémorisation (601) et d'un algorithme de hachage de première clé pour obtenir une première valeur de hachage, et transmettre la première valeur de hachage à l'unité de mémorisation (601) ; et
l'unité de mémorisation (601) est configurée en outre pour mémoriser la première clé et la première valeur de hachage.

14. Module de sécurité agréé selon l'une quelconque des revendications 9 à 13, dans lequel l'unité de mémorisation (601) est configurée en outre pour mémoriser une clé pré-partagée ; et
l'unité d'entrée (602) est configurée pour recevoir les informations de vérification qui comprennent des informations de vérification de seconde clé ; les informations de vérification de seconde clé comprennent une deuxième valeur de hachage de la première clé publique de signature de logiciel et de la seconde clé publique de signature de logiciel ; la deuxième valeur de hachage est obtenue par le serveur en exécutant un calcul sur la première clé publique de signature de logiciel et la seconde clé publique de signature de logiciel à l'aide de la clé pré-partagée prédéfinie et d'un algorithme de hachage de deuxième clé ; l'unité de vérification (603) est configurée pour exécuter un calcul sur la première clé publique de signature de logiciel et la seconde clé publique de signature de logiciel à l'aide de la clé pré-partagée mémorisée dans l'unité de mémorisation (601) et de l'algorithme de hachage de deuxième clé prédéterminé pour obtenir une deuxième valeur de hachage si la première clé publique de signature de logiciel légale qui correspond au logiciel et qui est mémorisée dans l'unité de mémorisation (601) est cohérente avec la première clé publique de signature de logiciel reçue par l'unité d'entrée (602), déterminer si la deuxième valeur de hachage obtenue par calcul est égale ou non à la deuxième valeur de hachage reçue par comparaison, et vérifier la légalité des informations de vérification de logiciel si la deuxième valeur de hachage obtenue par calcul est égale à la deuxième valeur de hachage reçue ;
ou,
l'unité de mémorisation (601) est configurée en outre pour mémoriser un PK_{CA} de clé signé et délivré par une autorité de certification, CA, tierce ; et
l'unité d'entrée (602) est configurée pour recevoir les informations de vérification qui comprennent des informations de vérification de seconde clé, les informations de vérification de seconde clé comprennent un certificat Cert(PK_{A2}) de la seconde clé publique de signature de logiciel PK_{A2} signé et délivré par la CA tierce ; dans lequel le certificat Cert(PK_{A2}) est obtenu en exécutant un cryptage à l'aide du PK_{CA} de clé signé et délivré par la CA tierce ; l'unité de vérification (603) est configurée pour exécuter un calcul sur la seconde clé publique de signature de logiciel reçue à l'aide du PK_{CA} de clé signé et délivré par la CA tierce pour obtenir un certificat Cert'(PK_{A2}) si la première clé publique de signature de logiciel légale qui correspond au logiciel et qui est mémorisée dans l'unité de mémorisation (601) est cohérente avec la première clé publique de signature de logiciel reçue par l'unité d'entrée (602), comparer le certificat Cert'(PK_{A2}) obtenu par calcul avec le certificat Cert(PK_{A2}) reçu, et vérifier la légalité des informations de vérification de logiciel si le certificat Cert'(PK_{A2}) obtenu par calcul est égal au certificat Cert(PK_{A2}) reçu.

15. Dispositif client agréé comprenant un module de réception (701) et le module de sécurité agréé (702) selon l'une quelconque des revendications 9 à 14, dans lequel le module de réception (701) est configuré pour recevoir des informations de clé et des informations de vérification correspondant à un logiciel et transmises par un serveur, et transmettre les informations de clé et les informations de vérification au module de sécurité agréé (702), dans lequel les informations de clé comprennent une clé publique de signature de logiciel à mettre à jour et une nouvelle clé publique de signature de logiciel, et les informations de vérification comprennent des informations de vérification de logiciel.
